# EUROPEAN PATENT APPLICATION

(11) **EP 2 056 011 A2**
(43) Date of publication of application: **06.05.2009**
(21) Application number: 08018841.0
(22) Date of filing: 28.10.2008
(51) Int. Cl.: F16L 47/16, F16L 47/32

(54) **Threaded pipe connector of plastic material with reinforcing metal ring**

(30) Priority: 30.10.2007 IT MI20070363 U
(71) Applicant: Aquatechnik S.p.A., 20020 Magnago, Milan (IT)
(72) Inventor: Petena', Lino, 21052 Busto Arsizio Varese (IT)
(74) Representative: Coloberti, Luigi

(57) **Abstract**

An internally threaded female pipe connector (10) of plastic material, for joints, manifolds, valves and the like. The pipe connector (10) comprises a body of plastic material having a peripheral wall (11) defining an internally threaded axial hole (12); a reinforcing metal ring (14) is incorporated by moulding into the peripheral wall (11), coaxially to the internal screw thread (13) of the pipe connector (10).

## Description

### BACKGROUND OF THE INVENTION

This invention refers to an internally threaded female pipe connector, which is particularly suitable for joints of pipes, manifolds, valves, taps and the like of moulded plastic material, normally used for plumbing, heating, and air-conditioning systems and for compressed air conveying systems.

### PRIOR ART

Joints of plastic material provided with an internally threaded female pipe connector are widely known and used in many fields, for example for connecting pipes, valves, taps and the like, in systems for conveying or distributing water, thermal fluids and compressed air.

In the conventional joints, the pipe connector is completely moulded from plastic material, and is substantially composed of a cylindrical wall defining an internally-threaded axial hole for the flow.

Joints, manifolds, taps, valves and the like, having moulded pipe connectors of plastic material, normally of a polypropylene or other technopolymer, are widely appreciated and used due to their easy assembling, low cost and due to their physical features which enable them to come into contact with any types of liquid and/or gaseous fluids.

However, the normal pipe connectors of plastic material, when screwed onto a pipe or a component, or with the passing of time, can be subject to the formation of cracks and/or ruptures which jeopard-ise the seal, with a consequent discharge of the liquid or fluid conveyed.

In order to obviate this drawback, joints have been proposed of moulded plastic material, providing the pipe connectors with a metal reinforcing element, substantially consisting of an internally threaded bushing, into which the pipe or the component is directly screwed.

However, the use of a metal reinforcing element of this kind, entails other drawbacks and comparatively high costs, compared to the joints with pipe connectors of a conventional kind.

In particular, the presence of a metal element in which to screw the pipe, coming into contact with the conveyed fluid, does not prove to be suitable for corrosive fluids or for fluids which are chemically incompatible with the metal used; therefore, it is necessary to make use of special steels, and to carry out mechanical threading operations, with a consequent increase in costs.

### OBJECTS OF THE INVENTION

Consequently, a need exists to find a new and different solution, capable of solving the aforementioned drawbacks.

Therefore, one object of this invention is to provide a pipe connector for joints, manifolds, valves, taps and the like of moulded plastic material, provided with a metal reinforcing element which does not require expensive preliminary mechanical operations, or the use of special metals, the pipe connector being suitable for coming into contact with any fluid, and at the same time offering adequate resistance to the technical and/or mechanical stresses to which the pipe connector may be subjected.

### BRIEF DESCRIPTION OF THE INVENTION

The foregoing can be achieved by means of a threaded pipe connector for joints of pipes, manifolds, valves, taps and the like, comprising a body of plastic material having a peripheral wall defining an internally threaded axial hole, and a metal reinforcing element, characterised in that the metal reinforcing element consists of a metal ring incorporated by moulding into the peripheral wall of the pipe connector, coaxially to the internal screw thread.

Preferably, the reinforcing metal ring extends from an end of the pipe connector, axially along at least part of the internal screw thread.

According to a preferential embodiment, the reinforcing metal ring is provided with at least one annular groove or with anchoring means for firmly anchoring to the plastic material of the pipe connector, during the moulding.

### BRIEF DESCRIPTION OF THE DRAWINGS

These and further features of the pipe connector according to this invention, and several of its numerous applications, will be described in greater detail hereunder with reference to the drawings, in which:
Fig. 1 shows a longitudinal cross-sectional view of the threaded pipe connector, of a generic joint for pipes, manifolds, valves or the like, according to this invention;
Fig. 2 shows a view of a linear joint for plastic pipes, provided with the threaded pipe connector of figure 1;
Fig. 3 shows a view of an elbow joint for plastic pipes, provided with the threaded pipe connector of figure 1;
Fig. 4 shows a view of a "T" joint for plastic pipes, provided with the threaded pipe connector of figure 1.

### DETAILED DESCRIPTION OF THE INVENTION

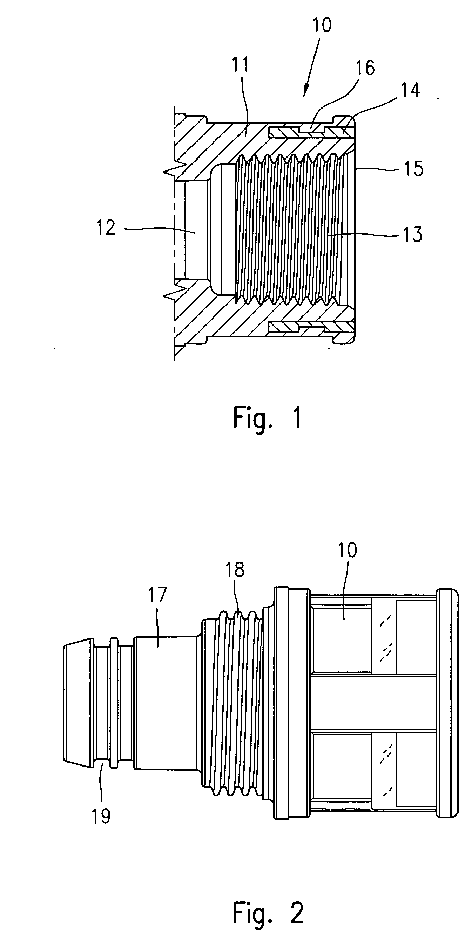

Figure 1 shows a longitudinal cross-sectional view of a generic threaded pipe connector of plastic material provided with a metal reinforcing element incorporated during the moulding, according to this invention.

Notwithstanding the examples of the subsequent figures, it is pointed out that the pipe connector of figure 1 can be applied to any type of joint, manifold, valve or the like of moulded plastic material, provided it is suitable for the intended purpose.

As shown in figure 1, the pipe connector indicated as a whole by the numerical reference 10, comprises a body of plastic material, substantially composed of a cylindrical wall 11 defining a hole 12 for the passage of a fluid, provided with an internal screw thread 13.

As shown by the same figure 1, the peripheral wall 11 of the pipe connector comprises an annular metal reinforcing element 14, incorporated during the moulding step.

In particular, the annular reinforcing element 14 consists of a metal ring, of adequate thickness, which extends coaxially to the internal screw thread 13 starting from the end 15 of the same pipe connector.

The reinforcing ring 14 can extend along the entire length of the screw thread 13, or part thereof along a section subjected to the highest stress. In the case shown, the metal ring 14 extends along a section substantially equivalent to two thirds of the length of the screw thread 13, the metal ring 14 being arranged close to the outer surface of the pipe connector; in this way, on the internal side of the reinforcing ring, the pipe connector has a thickness of plastic material, suitable for moulding the internal screw thread 13, and for contributing to the strength of the same pipe connector.

The reinforcing ring 14 can have both an internal cylindrical surface and an outer cylindrical surface, at least one of which has been appropriately shaped to ensure a firm anchorage of the plastic material to the metal ring during the moulding step. This can be achieved in various ways: for example, by corrugating one or both the surfaces of the ring, or by providing the ring 14 with at least one annular groove 16, or with through holes or slits into which the plastic material in the melted state can penetrate, during the moulding.

As mentioned previously, the threaded pipe connector according to this invention can form an integral part of any joint for pipes, the joint having any configuration, of manifolds, valves or the like, depending upon the different requirements; examples of its application are represented by the joints of figures 2, 3 and 4.

In particular, figure 2 shows a rectilinear joint comprising a first female threaded pipe connector 10, corresponding to that of figure 1 for connection to a first pipe, and a second pipe connector 17 designed to be tightly inserted into a second pipe; the second pipe connector 17 is provided with an outer screw thread 18 onto which is screwed a locking ring in a per se known way; grooves 19 are provided to house annular gaskets, not shown.

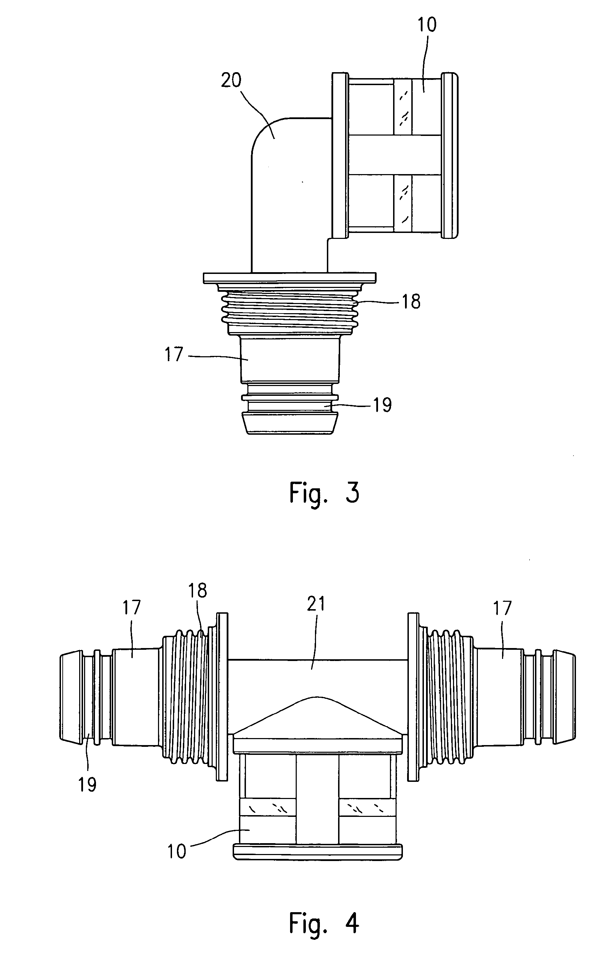

Figure 3 shows a corner or elbow joint 20, having a pipe connector 10 shaped similarly to the pipe connector of figure 2; consequently, the same numerical references have been used to indicate similar or equivalent parts, and reference is made to the description of the same figure 2.

Lastly, figure 4 shows a so-called "T" or tee joint 21, again comprising a pipe connector 10 similar to that of the joints of the preceding figures; consequently, also in figure 4 the same numerical references have been used to indicate similar or equivalent parts.

In the examples of the preceding figures, three joints have been shown having a female threaded pipe connector 10 according to this invention, in combination to other differently shaped pipe connectors; however, the threaded pipe connector 10 could be used with other types of joints, provided with one or more pipe connectors of another type, or as an integral part of valves, taps or modular elements for manifolds, in relation to the specific requirements of use.

Therefore, other modifications or variations may be made to the pipe connector or to the joint itself, without thereby deviating from the scope of protection defined by the claims.

## Claims

1. Threaded pipe connector (10) for joints of pipes, manifolds, valves and the like, comprising a body of plastic material having a peripheral wall (11) defining an internally threaded axial hole (12), and a metal reinforcing element (14), **characterised in that** the metal reinforcing element (14) consists of a metal ring (14) incorporated by moulding into the peripheral wall (11) of the pipe connector (10), coaxially to the internal screw thread (13).

2. Threaded pipe connector (10) according to claim 1, **characterised in that** the metal ring (14) extends from one end (15) of the pipe connector (10), along at least part of the internal screw thread (13).

3. Threaded pipe connector (10) according to claim 1, in which the wall (11) of the pipe connector (10) is provided with an internally threaded surface and an outer surface, **characterised in that** the metal ring (14) is positioned close to the outer surface.

4. Threaded pipe connector (10) according to claim 1, **characterised in that** the reinforcing metal ring (14) is shaped to have anchoring means for anchorage to the plastic material.

5. Threaded pipe connector (10) according to claim 4, **characterised in that** the anchoring means comprise at least one annular groove (16).

6. Threaded pipe connector (10) according to claim 4, **characterised in that** the anchoring means comprise at least one corrugated surface of the reinforcing ring (14).

7. Threaded pipe connector (10) according to claim 4, **characterised in that** the anchoring means comprise openings into the reinforcing metal ring (14) for the penetration of the plastic material.

8. A joint for pipes, manifolds, valves, taps or the like of moulded plastic material, comprising at least one internally threaded pipe connector (10) according to one or more of the preceding claims, taken alone or in combination with one another.
